(19) Europäisches Patentamt
European Patent Office
Office européen des brevets

(11) EP 1 237 017 A1

(12) EUROPEAN PATENT APPLICATION

(43) Date of publication:
04.09.2002 Bulletin 2002/36

(51) Int Cl.7: **G02B 5/30**, C08J 5/18

(21) Application number: 02003758.6

(22) Date of filing: 19.02.2002

(84) Designated Contracting States:
AT BE CH CY DE DK ES FI FR GB GR IE IT LI LU MC NL PT SE TR
Designated Extension States:
AL LT LV MK RO SI

(30) Priority: 20.02.2001 JP 2001042628

(71) Applicant: Fuji Photo Film Co., Ltd.
Kanagawa 250-0123 (JP)

(72) Inventor: Tsujimoto, Tadahiro
Minami-Ashigara-shi, Kanagawa, 250-0123 (JP)

(74) Representative: Grünecker, Kinkeldey, Stockmair & Schwanhäusser Anwaltssozietät
Maximilianstrasse 58
80538 München (DE)

# (54) Polarizing plate protection film

(57) Polarizing plate protection film for applying on at least one surface of polarizer characterized in that the moisture permeability is 3-10 g/m$^2$ x 24hr is proposed.

The polarizing plate protection film further contains equilibrium moisture content of 60% RH at 25 degrees Celsius is 0.01-1.5 %, 1-20% of hydrophobic plasticizer and 0.001-5% of degradation inhibitor.

The present invention prevents degradation of damp proof thermal characteristics of the polarizing plate protection film by adjusting moisture permeability in suitable range, and maintain polarizing capability well, and at the same time, the adhesive property between the polarizer and the polarizing plate protection film can be improved well.

According to the invention, moreover, the productivity of the polarizing plate protection film increases, and the liquid crystal display device using the polarizing plate protection film of the invention shows wide viewing angle and high contrast ratio.

Fig. 1

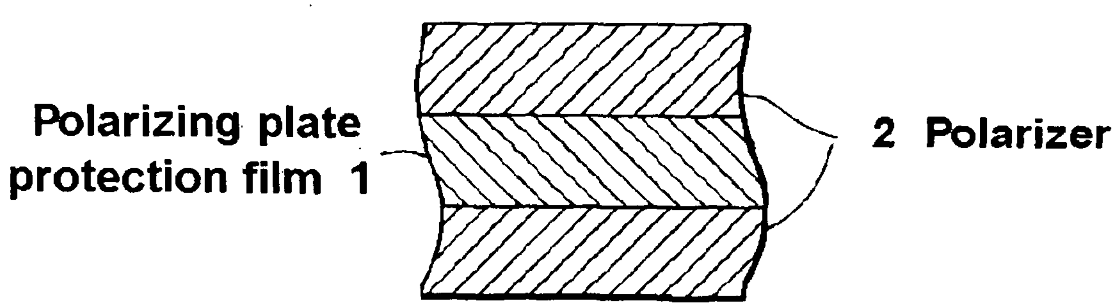


EP 1 237 017 A1

## Description

FIELD OF THE INVENTION

This invention relates to a protective film for polarizing plate used for liquid crystal display devices, etc.

BACKGROUND OF THE INVENTION

Polarizing plate used for liquid crystal display devices etc. comprises polarizer 1 and polarizing plate protection film 2 provided on both surfaces (or, one surface) of it as shown in FIG. 1, and these polarizer 1 and polarizing plate protection film 2 are laminated with adhesive.

Generally, polyvinyl alcohol series film or so adsorbing iodine and dichromatic dye is used as polarizer 1, and cellulose ester series film, polycarbonate film, acryl series film, polyester series film, polyolefin series film, norbornane series film, etc. are used as polarizing plate protection film 2. In such a polarizing plate, if moisture permeability of polarizing plate protection film 2 is large, damp proof thermal characteristics would deteriorate and dissociation of multi iodine ion or iodine elimination would occur in polarizer 1, thereby polarizing capability would fall.

The technologies preventing degradation of damp proof thermal characteristics are conventionally suggested, for example, JPA 59-159109 proposes a method for providing the polarizing plate protection film with high molecular compound membrane having water-vapor permeability 10 $g/m^2$ x 24hr or less and JPA 8-5386 proposes the polarizing plate which applied the protection film having water-vapor permeability of 200 $g/m^2$ x 24hr x100 μm or less at 80 degrees Celsius, 90% RH to protection membrane.

In addition, JPA 8-171016 proposes a manufacturing method of the polarizing plate of which the haze value of protection film consisting of cellulose triacetate film does not increase and JPA 5-119216 proposes manufacturing method of the polarizing plate of which the polarizing thin layer does not crack.

By the way, although the polarizing capability of the polarizing plate protection film would deteriorate, as described above, if the moisture permeability of it is too large, even in the case where the moisture permeability is too small, problems also occur. In other words, applying the polarizing plate protection film to both surfaces or to one surface of the polarizer would cause adhesion inadequacy by delaying the drying of the adhesive used for the application.

As described above, if the moisture permeability of polarizing plate protection film is too large, the damp proof thermal characteristics would be worse, and the polarizing capability would deteriorate, however, the adhesive property would be worse if said moisture permeability is too small.

The object of the present invention is to solve the above-mentioned problems, to provide the polarizing plate protection film which enables not to degrade polarizing capability, to improve adhesive property between the polarizer and the polarizing plate protection film by controlling the moisture permeability of the polarizing plate protection film among appropriate range and to increase productivity.

SUMMARY OF THE INVENTION

The present invention was completed by zealously examining the moisture permeability of polarizing plate protection film in order to solve the above-mentioned problems and by finding the range of the moisture permeability that enables to satisfy both the polarizing capability and the adhesive property permissible as product.

In other words, the polarizing plate protection film of the present invention has the composition characterized that its moisture permeability is from 3 to 10 $g/m^2$ x 24hr.

In the polarizing plate protection film of the present invention, the adhesive property is improved by making the moisture permeability 3 $g/m^2$ x 24hr or more because the moisture of the adhesive transmits moderately and drying is promoted, and superior polarizing capability is maintained by making the moisture permeability 10 $g/m^2$ x 24hr or less thereby restraining that moisture transmits to the polarizer even under the atmosphere of high-temperature and humidity.

BRIEF DESCRIPTION OF THE DRAWINGS

FIG. 1 is fragmentary sectional view that shows configuration of the polarizing plate.

DESCRIPTION OF THE PREFERRED EMBODIMENTS

According to the present invention, the moisture permeability of the polarizing plate protection film is from 3 to 10 g/$m^2$ x 24hr, preferably from 4 to 8 g/$m^2$ x 24hr. In the case where the moisture permeability is less than 3 g/$m^2$ x 24hr, the adhesive property degrades so that adhesion defects occur in the worst case and the productivity reduces. In addition, in the case where the moisture permeability exceeds 10 g/$m^2$ x 24hr, the damp proof thermal characteristics of the polarizer deteriorates, and preferred polarizing capability cannot be maintained.

In order to adjust the permeability of the polarizing plate protection film in the above-described range, it is appropriate to control the thickness of the polarizing plate protection film, to select the kind of hydrophobic property additive or the addition quantity, etc.

Regarding the thickness of the polarizing plate protection film, it is desirable to be 20-200 μm, and more desirable to be 40-150 μm. In the case where the thickness of the polarizing plate protection film is less than 20 μm, it becomes difficult to adjusts the moisture permeability down to 10 g/$m^2$ x 24hr or less, and in the case where the thickness exceeds 150 μm it becomes difficult to adjust the moisture permeability up to 3 g/$m^2$ x 24hr or more.

As the hydrophobic plasticizer, phosphate series plasticizer is representative. Typical phosphate series plasticizer are shown as the following Formula (Ia) and (Ib).

[Chemical Formula I]

(I a) (I b)

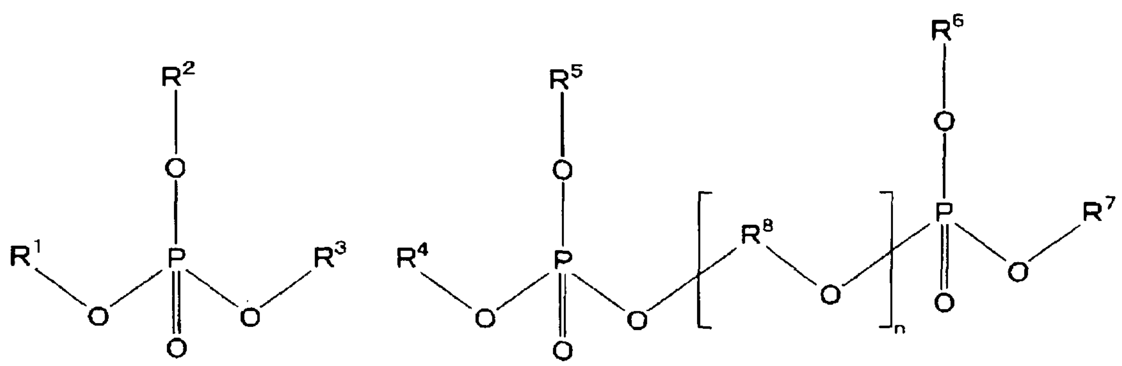

In the Formula (Ia) and (Ib), the alkyl group (including cycloalkyl group), aryl group or aralkyl group is designated individually by $R^1$, $R^2$, $R^3$, $R^4$, $R^5$, $R^6$, and $R^7$. Each group may have substituent. Regarding the number of carbon atom of alkyl group, it is preferable to be from 1 to 12. Typical examples of the alkyl group are, ethyl, butyl, cyclohexyl and octyl. Typical example of the aryl is phenyl. Typical example of the aralkyl group is benzyl. Typical examples of said substituent for each radical are alkyl group (example: methyl), aryl group (example: phenyl), alkoxy group (example: methoxy, butoxy) and aryloxy group (example: phenoxy).

In the formula (Ib), the coupling radical of divalence selected among alkylene group, arylene group, sulfonyl group or combination of these is designated by the $R^8$. Regarding the n, it is an integer of 1 or more and preferable to be from 1 to 10. Typical examples of phosphate series plasticizer are triphenylphosphate, Biphenyldiphenylphosphate, tricrezylphosphate, octyldiphenylphosphate, triethylphosphate and tributylphosphate. In addition, carboxylate series plasticizer may be used as said phosphate series plasticizer. Typical examples of carboxylate series plasticizer are dimethylphthalate, diethylphthalate, dibutylphthalate, dioctylphthalate, diethylhexylphthalate, dimethoxyethylphthalate, glyceroltriacetate, butyl-phthalyl-butylglycolate, ethylphthalylethylglycolate, and carbinylphthalylethylglycolatetriacetin.

In addition, typical examples of citric acid ester are acetyl triethyl citrate (OACTE), citric acid tributyl (OACTB) and so on, and examples of other carboxylate are butyl oleate (BO), methyl linoleate acetyl (MAL), dibutyl sebacate (DBS), various kinds of trimerit acid ester, etc. Typical example of the other low molecular plasticizer is o- or p-toluenethylsulphonamide.

In addition, the ester of trimerit acid or pyromerit acid may be jointly used with phosphate series plasticizer. This ester of the trimerit acid or the pyromerit acid has a function of preventing a bleed out of phosphate series plasticizer. JPA 5-5047 discloses about these acid ester.

Regarding the quantity of addition of hydrophobic plasticizer, it is desirable to be from 1 to 20 %, and more desirable to be from 5 to 15 %. In the case where said quantity of addition is less than 1 %, it is not able to reduce the moisture permeability effectively, and in the case where said quantity of addition exceeds 20 % there is fear that the moisture permeability becoming too small.
It is preferable for the equilibrium moisture content of the polarizing plate protection film at 25 degrees Celsius, 60 % RH to be from 0.01 to 1.5 %, and more preferable to be from 0.2 to 1.2 %. In the case where the equilibrium moisture content is less than 0.01 %, the brittleness of the polarizing plate protection film increases and causes crush piece in an occasion of cutting and punching, and the multi-layer polarizing plate exfoliates, causing depression of quality or productivity. In addition, the increase of electro-static charge induces to easily adsorb foreign matter among the production process, and there may be the chance of losing the handling characteristic of sheet product of the polarizing plate protection film.
On the other hand, in the case where the equilibrium moisture content exceeds 1.5 %, the polarizing capability of the polarizer of the polarizing plate may deteriorate, causing a problem of depression of degree of polarization by decolorization of iodine, in particular, when it is an iodine absorbing type polarizer. Furthermore, a size change may cause unevenness in the display of the liquid crystal display plate.
As the materials for the polarizing plate protection film of this invention, films such as cellulose ester, acryl, polyester, polycarbonate, etc. may be adopted and it is desirable to be formed of the film comprising more than 80 % of cellulose ester.
Typical cellulose esters are cellulose triacetate, cellulose triacetate butyrate, cellulose triacetate propionate, etc. In these, the cellulose acetate of which the acetification degree is from 58 to 62.5 % is preferable. In the case where the acetification degree is less than 58%, moisture component rate of the polarizing plate protection film increases and the size change easily occur thereby decreasing degree of polarization of the polarizer. On the other hand, in the case where acetification degree exceeds 62.5 %, the solubility for the solvent deteriorates, and productivity decreases.
The cellulose acetate includes cellulose triacetate (TAC) and cellulose diacetate (DAC). Cellulose acylate is suitable for polarizing plate protection film of the present invention. For more information about the cellulose acylate, description is as the followings.
As for the preferred cellulose acylate, substitution degree to hydroxy group of the cellulose satisfies all of the following formulae from ① to ④ .

① $2.6 \leqq A+B \leqq 3.0$

② $2.0 \leqq A \leqq 3.0$

③ $0 \leqq B \leqq 0.8$

④ $1.9 < A-B$

In the formula, A and B represent substituent of acyl group substituted for by hydroxy group of cellulose, A is the substitution degree of acetyl group and B is the substitution degree of acyl group of which the number of carbon atom is from 3 to 5.
There are three hydroxy groups in 1 glucose unit of the cellulose, and the above-described figures represent the substitution degree to said hydroxy group 3.0, the maximum substitution degree being 3.0. Generally, as for the cellulose triacetate, the substitution degree of A is 2.6 or more and 3.0 or less (in this case the maximum hydroxy group without substitution is 0.4), and in the case where B=0 said cellulose is the cellulose triacetate.
Regarding the cellulose acylate used in dope of a solution film forming method of the present invention, cellulose triacetate of which the whole acyl group are acetyl group, and of which the acetyl group is 2.0 or more and acyl group with number of carbon atom 3-5 is 0.8 or less, and with the hydroxy group without substitution is 0.4 or less are preferable, and in particular, the cellulose triacetate of substitution degree 2.6-3.0 is more preferable.
In addition, the substitution degree is determined by measuring the degree of coupling of acetic acid to substitute hydroxy group of cellulose and aliphatic acid of number of carbon atom 3-5, and by means of calculation. As the measuring method, it is executed following D-817-91 of ASTM.
Regarding the acyl group of number of carbon atom 3-5 other than acetyl group, typical examples are propionyl group ($C_2H_5CO$-), butyryl group ($C_3H_7CO$-) (n-, iso-), and valeryl group (with $C_4H_9CO$-) (n-, iso-, sec-, tert-), and among

these, one of n-substitution is preferable in the view-point of mechanical strength and dissolvability, etc. in the form of film, and in particular, n-propionyl group is more preferable.

In addition, mechanical strength and damp proof thermal characteristics deteriorate if the substitution degree of acetyl group is small.

The solubility to organic solvent would be improved if the substitution degree of acyl group of which the number of carbon atom is from 3 to 5 were large, and the physical property may practical as far as each substitution degree is in the range of above description.

As for the degree of polymerization of cellulose acylate (viscosity mean), it is preferable to be from 200 to 700, and in particular, more preferable to be from 250 to 550. The viscosity mean degree of polymerization (DP) can be measured with Ostwald's viscosimeter and determined from measured inherent viscosity [η] of cellulose acylate using the following formula.

$$DP = [\eta] / Km \text{ (in the formula, Km is constant: } 6 \times 10^{-4}\text{)}$$

Typical example of cellulose as cellulose acylate material is cotton linter or wood pulp, etc., and any cellulose acylate provided from the material cellulose or the mixture of these may be employed.

Typical examples of organic solvent dissolving cellulose acylate are hydrocarbon (example: benzene, toluene), halogenated hydrocarbon (example: methylene chloride, chlorobenzene), alcohol (example: methanol, ethanol, diethylene glycol), ketone (example: acetone), ester (example: methyl acetate, ethyl acetate, propyl acetate) and ether (example: tetrahydrofuran, methyl cellosolve), and so on.

Among these, halogenated hydrocarbon of which the number of carbon atom is from 1 to 7 is preferable, and the methylene chloride is the most preferable.

From the view-point of the solubility of cellulose acylate, peel-apart property from support, mechanical strength of the film, the physical property of optical characteristics, etc., it is desirable to mix one or several kinds of alcohol of which the number of carbon atom is from 1 to 5 to the solvent in addition to the methylene chloride. Regarding the content of alcohol, it is desirable to be 2-25 mass % to the whole solvent, and more desirable to be 5-20 mass %. Concrete examples of alcohol are methanol, ethanol, n-propanol, isopropanol, n-butanol, etc., and methanol, ethanol, n-butanol or the mixture of these is preferably used.

In addition, it is suitable to employ the solvent consisting of methyl acetate, ketone and alcohol and the solvent ratio of which are respectively 20-90 mass % of the methyl acetate, 5-60 mass % of the ketone and 5-30 mass % of the alcohol.

Solvent composition without the use of methylene chloride is suggested recently in order to keep the influence of environmental pollution minimum. For this purpose, ether of which the number of carbon atom is 3-12, ketone of which the number of carbon atom is 3-12, and ester of which the number of carbon atom is 3-12 are preferable, and the appropriate mixture of these is employed. The ether, ketone and ester with cyclic structure may be adopted. Ether, ketone and the chemical compound having two or more functional group of esters (in other words, -O-, -CO- and -COO-) may be employed as the organic solvent.

The organic solvent may have other functional group such as alcoholic hydroxy group. In the case where the organic solvent has the functional group of two kinds or more, it is suitable that the number of carbon atom is within the code limit of chemical agent having either of said functional groups.

Typical examples of ether of which the number of carbon atom is 3-12 are diisoprpyl ether, dimethoxymethane, dimethoxyethane, 1,4-dioxane, 1,3-dioxolane, tetrahydrofuran, anisole and phenetole. Typical examples of ketone class of which the number of carbon atom is 3-12 are acetone, butanone, diethyl ketone, diisobutyl ketone, cyclopentanone, cyclohexanone and methylcyclohexanone. Typical examples of the ester of which the number of carbon atom is 3-12 are ethyl bormate, propyl bormate, pentyl bormate, methyl acetate, ethyl acetate and pentyl acetate. Typical examples of organic solvent having functional group equal to or more than two kinds are 2-ethoxyethyl acetate, 2-methoxy ethanol and 2-butoxyethanol.

Various kinds of additive appropriate for use in each preparation process, for example, ultraviolet radiation absorbent, degradation inhibitor, fine particle powder, stripping aid, optical characteristic moderator, and fluorine-containing surface active agent can be added to dope used in the polarizing plate protection film of the present invention.

The timing of addition may be at any time in said dope preparing process, or said dope-preparing process itself may consist attaching the step of addition and mix of the additives after the last step of the preparation process.

As said ultraviolet radiation absorbent, an arbitrary kind may be selected depending on purpose, and absorbent such as salicylate ester series, benzophenone series, benzotriazole series, benzoate series, cyanoacrylate, and nickel complex salt series is suitable, however, benzophenone series, benzotriazole series, salicylate ester series are desirable.

As examples of benzophenone series ultraviolet radiation absorbent, there are 2,4-dihydroxybenzophenone,

2-hydroxy-4-acetoxy benzophenone, 2-hydroxy-4-methoxy benzophenone, 2,2'-di-hydroxy-4-methoxy benzophenone, 2,2'-di-hydroxy-4, 4'-methoxy benzophenone, 2-hydroxy-4-n-octoxybenzophenone, 2-hydroxy-4-dodecyloxybenzophenone, 2-hydroxy-4- (2-hydroxy-3-methacryloxine) propoxy benzophenone, etc.

As benzotriazole series ultraviolet radiation absorbent, there are 2(2'-hydroxy-3'-tert-butyl-5'-methylphenyl)-5-chloro benzotriazole, 2(2'-hydroxy-5'-tert-butylphenyl) benzotriazole, 2(2'-hydroxy-3', 5'-di-tert-amyl phenyl) benzotriazole, 2(2'-hydroxy-3', 5'-di-tert-butylphenyl)-5-chloro benzotriazole, 2(2'-hydroxy-5'-tert-octylphenyl) benzotriazole, etc. As salicylate ester series ultraviolet radiation absorbent, there are phenylsalicylate, p-octyl phenylsalicylate, p-tert-butyl phenylsalicylate, etc.

Among the ultraviolet radiation absorbents described above, 2-hydroxy-4-methoxy benzophenone, 2,2'-di-hydroxy-4, 4'-methoxybenzophenone, 2(2'-hydroxy-3'-tert-butyl-5'-methylphenyl)-5-chloro benzotriazole, 2(2'-hydroxy-5'-tert-butylphenyl) benzotriazole, 2(2'-hydroxy-3', 5'-di-tert-amyl phenyl) benzotriazole, and 2(2'-hydroxy-3', 5'-di-tert-butylphenyl)-5-chloro benzotriazole are particularly desirable.

It is desirable for the ultraviolet radiation absorbent to be used as the compound of the plural absorbents of which the absorption wave is respectively different because it can get high screening effect within wide wavelength range.

It is desirable for the ultraviolet radiation absorbent for liquid crystal to be superior in absorption power for ultraviolet radiation at wavelength 370 nm or less in terms of degradation prevention of the liquid crystal, and to be with a little absorption of visible light at wavelength 400 nm or more in terms of displaying characteristic of the liquid crystal.

As desirable ultraviolet radiation absorbents, for example, there are oxybenzophenone series chemical agent, benzotriazole series chemical agent, salicylate ester series chemical agent, benzophenone series chemical agent, cyanoacrylate chemical agent, nickel complex salt series chemical agent, etc. Particularly preferred ultraviolet radiation absorbents are benzotriazole series chemical agent and benzophenone series chemical agent. Among these, benzotriazole series chemical agent is the most preferable because it induces little unnecessary coloration against cellulose ester.

In addition, each of JPA 8-239509, JPA 8-29619, JPA 7-11056, JPA 7-11055, JPA 7-11056, JPA 6-148430, JPA 6-118233, JPA 6-107854, JPA 5-271471, JPA 60-235852, JPA 5-194789, JPA 5-1907073, JPA 3-199201, and JPA 2000-204173 discloses about the ultraviolet radiation absorbent.

Regarding the quantity of addition of ultraviolet radiation absorbent, it is desirable to be 0.001-5 mass % to cellulose acylate, and more desirable to be 0.01-1 mass %. In the case where the quantity of addition is less than 0.001 mass % to cellulose acylate, enough effect of the addition does not appear, and in the case where the quantity of addition exceeds 5 mass %, it becomes probable that the ultraviolet radiation absorbent bleeds out on film surface.

In addition, the ultraviolet radiation absorbent may be added simultaneously in the timing of cellulose acylate dissolution, or may be added in the dope after the dissolution. In particular, the way that the ultraviolet radiation absorbent solution is added in the dope just before casting by means of a static mixer or so is preferable because it is able to easily adjust optical absorption characteristic. As said degradation inhibitor, cellulose triacetate etc. may be suitable for preventing from resolution. As the other degradation inhibitors, there are chemical agents such as butyl amine, hindered amine chemical agent (disclosed in JPA 8-325537), guanidine compounds (disclosed in JPA 5-271471), benzotriazole series ultraviolet radiation absorbent (disclosed in JPA 6-235819), benzophenone series ultraviolet radiation absorbent (disclosed in JPA 6-118233). Among these, typical examples of the hindered amine chemical agent are t-butyl amine, triphenylamine, tribenzylamine, etc. In addition, as the guanidine compounds, there are chemical agent as shown by each following Formula (2a) (2b).

[Chemical Formula 2]

(2a)

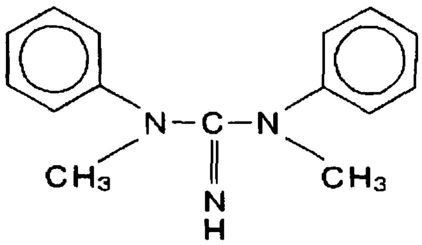

(2b)

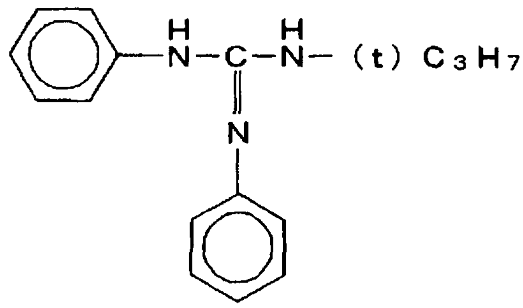

Regarding a quantity of addition of degradation inhibitor, it is desirable to be 0.001-5 %, and more desirable to be 0.01-1 %. In the case where the quantity of addition is less than 0.001 %, enough effect of the addition does not appear and in the case where the quantity of addition exceeds 5 %, it becomes probable that the material cost rises and become disadvantageous.

As said fine particle powder, silica, kaolin, talc, diatomaceous earth, quartz, calcium carbonate, barium sulfate, titania, alumina, etc. can be optionally used depending on the purpose. It is preferable to disperse these fine particle powders in a binder solution with arbitrary measure such as high-speed mixer, ball mill, an attriter, ultrasonic dispersion machine before they are added in the dope. As the binder, cellulose acylate is desirable.

It is preferable for the fine particle powder to be dispersed along with other additives as the ultraviolet radiation absorbent, etc. Regarding the dispersion solvent, although an arbitrary solvent may be applicable, it is preferable to be the solvent of the composition similar to the dope solvent. As for the number average particle size of the fine particle powder, 0.01-100 μm is preferable, and particularly 0.1-10 μm is more preferable. Said dispersions may be added simultaneously in the timing of a cellulose acylate dissolution, or may be added in the dope among arbitrary production process, however, the way that the dispersions are added in the dope just before casting by means of a static mixer or so is preferable similarly as the ultraviolet radiation absorbent. Regarding the content of the fine particle powder, it is desirable to be 0.001-5 mass % to the cellulose acylate, and more desirable to be 0.01-1 mass %. In the case where the quantity of addition is less than 0.001 mass % to the cellulose acylate, enough effect of the addition appears and in the case where the quantity of addition exceeds 5 mass %, it becomes probable that the surface appearance of the polarizing plate protection film degrades.

As said stripping aid, surface-active agent is effective, and there are phosphoric acid series, sulfonic acid series, carboxylate series, nonion series, cation series, etc. not particularly limited. These stripping aids are disclosed in, for example, JPA 61-243837, etc.

Regarding the quantity of addition of said stripping aid, it is desirable to be 0.001-2 mass % to the cellulose acylate, and more desirable to be 0.01-1 mass %. In the case where the quantity of addition is less than 0.001 mass % to the cellulose acylate, enough effect of the addition does not appear and in the case where the quantity of addition exceeds 2 mass %, it becomes probable that the stripping aid precipitates or insoluble materials generate.

The nonion series surface-active agent is the surface active agent of which the nonion nature hydrophilic group is polyoxyethylene, polyoxy propylene, polyoxy butylene, poly glycidyl and sorbitan, and concretely, they are polyoxyethylene alkyl ether, polyoxyethylene alkyl phenyl ether, polyoxyethylene-polyoxy propylene glycol, polyalcohol fatty acid partial ester, polyoxyethylene polyalcohol fatty acid partial ester, polyoxyethylene fatty acid ester, polyglycerol fatty acid ester, a fatty acid diethanolamide, triethanolamine fatty acid partial ester.

The anionic series surface-active agent is carboxylate, sulfate, sulfonic acid salt, or phosphate salt and the typical examples are fatty acid salt, alkyl benzene sulfonic acid salt, alkyl naphthalene sulfonic acid salt, alkyl sulfonic acid salt, α-olefin sulfonic acid salt, dialkylsulfosuccinic acid salt, α-sulfonated fatty acid salt, N-methyl-N oleyl taurine, petroleum sulfonic acid salt, alkyl sulfate salt, sulfated fats and oil, polyoxyethylene alkylether sulfate, polyoxyethylene alkyl phenyl ethereal sulfate salt, polyoxyethylene styrenated phenyl ethereal sulfate salt, alkyl phosphate salt, polyoxyethylene alkylether phosphate, naphthalene sulfonic acid salt formaldehyde condensate, etc.

The cation series surface-active agent is amine salt, the fourth grade ammonium salt, pyridium salt, etc. and examples are the first, second and third fatty amine salt, and the fourth grade ammonium salt (tetraalkylammonium salt, trialkyl benzyl ammonium salt, alkyl pyridium salt, alkyl imidazolium salt, etc.).

The amphoteric series surface-active agent is carboxy betaine, sulfobetaine, etc. and examples are N-trialkyl-N-carboxymethyl ammonium betaine, and N-trialkyl-N-sulfoalkylaneanmoniumbetaines. By adding said fluorine system surface-active agent, static elimination effect will be expected.

Regarding the quantity of addition of said fluorine-containing surface-active agent, it is desirable to be 0.002-2 mass % to the cellulose acylate, and more desirable to be 0.01-0.5 mass %. In the case where the quantity of addition is less than 0.002 mass % to the cellulose acylate, enough effect of the addition does not appear and in the case where the quantity of addition exceeds 2 mass %, it becomes probable that the surface-active agent precipitates or insoluble materials generate.

In the present invention, retardation activator (optical characteristics moderator) may be added to the dope. By adding the retardation activator, optical anisotropy of the polarizing plate protection film becomes controllable. As for the retardation activator, it is preferable to employ aromatic compound having at least two aromatic rings in order to adjust the retardation of the cellulose acylate film.

As for the aromatic compound, it is applied in the range of 0.01-20 mass part for 100 mass part of the cellulose acylate. It is desirable for the aromatic compound to be applied in the range of 0.05-15 mass parts for 100 mass part of the cellulose acylate, and more desirable to be applied in the range of 0.1-10 mass part. Two or more kinds of the aromatic compound are jointly applicable.

Among aromatic ring of the aromatic compound, aromatic heterocycle ring is included in addition to aromatic hydrocarbon ring. Regarding the aromatic hydrocarbon ring, it is particularly preferable to be 6- membered ring (in other words, benzene ring). The aromatic. heterocycle ring is generally unsaturated heterocycle. As for the aromatic heterocycle ring, it is preferable to be 5, 6, or 7-membered ring, and it is more preferable to be 5 or 6-membered ring.

The aromatic heterocycle ring generally has the maximum numbers of double bond. As heteroatoms, nitrogen atom, oxygen atom, and sulfur atom are preferable and the nitrogen atom is particularly preferable. Typical examples of aromatic heterocycle ring are furan ring, thiophene ring, pyrrole ring, oxazole ring, isoxazole ring, thiazole ring, isothiazole ring, imidazole ring, pyrazole ring, furazan ring, triazole ring, pyran ring, pyridine ring, pyridazine ring, pyrimidine ring, and pyrazine ring 1,3,5- triazine ring.

In the present invention, colorant may be added to the dope. By adding the colorant, a light piping phenomena can be prevented even when the dope is applied to the support for light-sensitive material, etc. Regarding the a quantity of addition of said colorant, it is desirable to be 10-1000 ppm with weight rate to the cellulose acylate, and more desirable to be 50-500 ppm.

Moreover, heat stabilizer, such as salts of alkaline earth metal, such as magnesium or cesium, antistatic agent, flame retardant, lubricant, etc. can be appropriately added to the dope of the present invention depending on requirement. Following description is as to optical characteristics of the polarizing plate protection film of the present invention.

First, the retardation in the surface of the polarizing plate protection film (Re) is determined by measuring difference between both the longitudinal refractive index and the lateral refractive index in the wavelength of 632.8 nm using ellipsometer (polarimetry meter AEP-100, produced by Shimazu Corporation) and multiplying the value of film thickness with the following formula.

$$Re = (nx - ny) \times d$$

nx: refraction index of lateral direction
ny: refraction index of longitudinal direction

The small retardation (Re) shows that there is no optical anisotropy in the surface direction, and practical depending on application among the range of 0-300 nm. In addition, the retardation (Rth) in the thickness direction of film is important, too, and is determined by multiplying the value of film thickness to the value of birefringence in thickness direction in the wavelength of 632.8 nm with the following formula.

$$Rth = \{(nx + ny)/2 - nz\} \times d$$

nx: refraction index of lateral direction
ny: refraction index of longitudinal direction
nz: refraction index of thickness direction

The small refraction index in the thickness direction shows that there is no optical anisotropy in the thickness direction, and the suitable range is decided depending on application. Generally speaking, Rth of the cellulose acylate film produced with the present invention is from zero nm to 600 nm per 100 μm, and besides, practically used in the range of from zero nm to 400 nm.

The polarizing plate protection film of the present invention can be utilized as various films, for example, as

optical compensation sheet, films for optical use such as support films for AR, LR, AG membrane, or support film for photographic materials. In the case where the present invention is applied to optical compensation sheet, the polarizing plate protection film itself is used as the optical compensation sheet. In addition, in the case where the film itself is used as the optical compensation sheet, it is desirable that a transmission axis of the polarizing plate and a lagging axis of the optical compensation sheet are deployed substantially parallel or perpendicular. JPA 10-48420 discloses about the arrangement of both the polarizing plate and the optical compensation sheet. The liquid crystal display device has the constitution of liquid crystal cell carrying liquid crystal between two pieces of electrode substrate, two polarizing plates deployed on both surfaces of said liquid crystal cell, and at least one optical compensation sheet deployed between said liquid crystal cell and said polarizing plate.

The liquid crystal layer of the liquid crystal cell is usually formed by sealing in the liquid crystal in the space made between two pieces of substrate by putting in a spacer. The transparent electrode layer is formed on the substrate as transparent film including electro conductive substance. Further, a gas barrier layer, a hard coat layer or an undercoat layer (used for adhesion of the transparent electrode layer) may be applied on the liquid crystal cell. These layers are usually applied on the substrate. The thickness of the substrate for the liquid crystal cell is generally from 50 μm to 2 mm.

The optical compensation sheet is birefringent and used for the purpose of removing coloration of display screen of the liquid crystal display device, and of improving viewing angle characteristic. The cellulose acylate film itself of the present invention can be used as the optical compensation sheet.

Moreover, the function of an antireflection layer, an antiglare layer, $\lambda/4$ layer and biaxial stretching cellulose acylate film can be applied. Moreover, in order to improve viewing angle of the liquid crystal display device, a laminated optical compensation sheet of both the cellulose acylate film of this technology and birefringence film of reverse (positive/negative relation) property can be used. Furthermore, the optical compensation sheet having the optical anisotropy layer including mesomorphism chemical agent (in particular, discotheque mesomorphism molecular) on support is proposed (JPA 3-9325, JPA 6-148429, JPA 8-50206, and JPA 9-26572).

The protective film for polarizing plate of this invention can be used as the support for said optical compensation sheet. Among the polarizers of said polarizing plate, there are iodine series polarized light membranes, dye series polarized light membrane using dichromatic dye, and polyene series polarized light membrane. Each polarizer is generally produced using polyvinyl alcohol series film.

As for the protection film for the polarizing plate, it is desirable to have the thickness of 25-350 μm, and more desirable to have the thickness of 40-200 μm. A surface finishing membrane can be applied to the liquid crystal display device.

The function of the surface finishing membrane includes a hard coat, antihazing treatment, antiglaring treatment and antireflection treatment. As the adhesive bonding the polarizer and the protective film for polarizing plate, there are polyvinyl alcohol series adhesive, acrylic resin series adhesive, epoxy series resin adhesive, and isocyanate series adhesive. It is desirable that said optical anisotropy layer is a layer including the discotheque mesomorphism molecular with negative uniaxis and with oblique orientation.

As for the layer including the discotheque mesomorphism molecular, the hybrid orientation where the angle between a disc face and a support face may vary in depth direction of optical anisotropy layer can be adopted, and the homeothropic orientation where the disc face is parallel to the support face, the homogeneous orientation where the disc face is perpendicular to the support face, or the twist orientation where the disc face is twisted in depth direction of optical anisotropy layer may be adopted. In addition, it is probable that these orientations coexist (for example, the hybrid orientation + the twist orientation). It is preferable that the hybrid orientation exists in said layer. Each optical axis one by one of the discotheque mesomorphism molecular exists in normal direction of the disc face.

However, as the whole layer in which the discotheque mesomorphism molecular makes hybrid orientation, it has no optical axis. The polarizing plate protection film of the present invention can be used as the liquid crystal cell of various display modes. Various display modes such as TN (Twisted Nematic), IPS (In-Plane Switching), FLC (Ferroelectric Liquid Crystal), AFLC (Anti-Ferroelectric Liquid Crystal), OCB (Optically Compensatory Bend), STN (Supper Twisted Nematic), VA (Vertically Aligned), and HAN (Hybrid Aligned Nematic) is proposed. In addition, the display mode dividing the orientation of said display mode is also proposed.

The cellulose acylate film is effective in all the liquid crystal display device of each display mode. In addition, it is effective for all the liquid crystal display device of transmission type, reflecting type, and half transmission type.

The polarizing plate protection film of the present invention can be used as the support for optical compensation sheet of TN type liquid crystal display device having the liquid crystal cell of TN mode. The liquid crystal cell of TN type and the TN mode liquid crystal display device are well known for a long time. Regarding the optical compensation sheet used for the TN type liquid crystal display device, each of JPA 3-9325, JPA 6-148429, JPA 8-50206 and JPA 9-26572 discloses in detail. In addition, paper by Mori and other (Jpn. J. Appl. Phys. Vol.36 (1997) p.143 or Jpn. J. Appl. Phys. Vol.36 (1997) p.1068) describes about it. Regarding the TN type liquid crystal display device, each of JPA 10-123478, WO 9848320, and the Japanese Patent No.3022477 discloses in detail.

The polarizing plate protection film of the present invention can be used as the support for optical compensation sheet for STN type liquid crystal display device having the liquid crystal cell of STN mode. In the STN type liquid crystal display device, cylindrical shape mesomorphism molecular in the liquid crystal cell is generally twisted in the range of 90-360 degrees and the product ($\Delta$nd) of both index of refraction anisotropy ($\Delta$n) and cell gap (d) of the cylindrical shape mesomorphism molecular is in the range of 300-1500 nm. Regarding the optical compensation sheet used for the STN type liquid crystal display device, JPA 2000-105316 discloses in detail.

The polarizing plate protection film of the present invention can be used as the support for optical compensation sheet of VA type liquid crystal display device having the liquid crystal cell of VA mode. It is desirable for the optical compensation sheet used for VA type liquid crystal display device that the direction that magnitude of retardation becomes the smallest exists neither in the face of optical compensation sheet nor in its normal direction. Optical property of the optical compensation sheet used for the VA type liquid crystal display device is determined by the optical property of the optical anisotropy layer, by the optical property of the support and by the arrangement between the optical anisotropy layer and the support. In the case where two pieces of optical compensation sheet are used for VA type liquid crystal display device, it is preferable to adjust the retardation in the face of optical compensation sheet to among the range of from -5 nm to 5 nm.

Therefore, it is desirable for the magnitude of retardation in each face of two pieces of optical compensation sheet to be adjusted to 0-5. In the case where one piece of optical compensation sheet are used for VA type liquid crystal display, It is preferable to adjust the retardation in face of optical compensation sheet to among the range of from -10 nm to 10 nm.

The polarizing plate protection film of the present invention can be used as the support for optical compensation sheet of OCB type liquid crystal display device having liquid crystal cell of OCB mode or of HAN type liquid crystal display device having the liquid crystal cell of HAN mode. It is desirable for the optical compensation sheet used for OCB type liquid crystal display device or HAN type liquid crystal display device that the direction that magnitude of retardation becomes minimum exists neither in the optical compensation sheet nor in its normal direction. Optical property of the optical compensation sheet used for the OCB type liquid crystal display device or for the HAN type liquid crystal display device is also determined by the optical property of the optical anisotropy layer, by the optical property of the support and by the arrangement between the optical anisotropy layer and the support. Regarding the optical compensation sheet used for the OCB type liquid crystal display device or HAN type liquid crystal display device, JPA 9-197397 discloses in detail. In addition, paper by Mori and other (Jpn. J. Appl. Phys. Vol.38 (1999) p.2837) describes about it.

The polarizing plate protection film of the present invention can be used as support for optical compensation sheet of ASM (Axially Symmetric Aligned Micro cell) type liquid crystal display device having liquid crystal cell of ASM mode. The liquid crystal cell of ASM mode is characterized that a resin spacer of whom the position is adjustable maintains the thickness of the cell. Other property of the liquid crystal cell of ASM mode is similar to the property of the liquid crystal cell of TN mode. Regarding the liquid crystal cell of ASM mode and the ASM type liquid crystal display device, paper of Kume and other (Kume et al., SID98 Digest 1089 (1998)) describes in detail.

EXAMPLES

[Examples 1-23 and Comparative Examples 1-25]

<Manufacturing method of the polarizing plate protection film>

Polarizing plate protection film consisting of cellulose triacetate (acetification degree: 59.5 %) was manufactured by filtering the dope prepared by prescription shown in Table 1, casting said dope on the surface of stainless belt of mirror plane, stripping off after desiccation, and drying for one hour at 120 degrees Celsius.

In addition, the dope including methyl acetate was prepared by mixing the cellulose triacetate and the plasticizer (triphenylphosphate, Biphenyldiphenylphosphate), cooling down to -70 degrees Celsius, and heat-treating, then the polarizing plate protection film was manufactured by filtering said dope, casting and drying in the same way.

Moreover, the polarizing plate protection film consisting of Arton, polycarbonate, and polyethersulfone was manufactured by filtering the dope after dissolving with dichloromethane, casting and drying similarly.

The Examples 1 to 23 and the Comparative Examples 1-25 were executed by changing the thickness of said film (20 μm, 40 μm, 80 μm, 120 μm), and adjusting moisture permeability. The Prescription of the Examples and the Comparative Examples are shown in Table 1 and Table 2. In Table 1 and Table 2, "Pres." means Prescription, "Ex." means Example, and "C.E." means Comparative Example.

[Table 1]

(Weight %)

| | | Pres. 1 | Pres.2 | Pres.3 | Pres.4 | Pres.5 | Pres.6 | Pres.7 | Pres.8 | Pres.9 |
|---|---|---|---|---|---|---|---|---|---|---|
| TAC | | 15.00 | 15.00 | 15.00 | 15.00 | 15.00 | 15.00 | 15.00 | 15.00 | 15.00 |
| Triphenyl Phosphate | | 3.00 | 1.50 | 0.75 | 2.00 | 1.00 | 0.50 | 2.00 | 1.00 | 0.50 |
| Biphenyldiphenyl Phosphate | | 0.00 | 0.00 | 0.00 | 1.00 | 0.50 | 0.25 | 1.00 | 0.50 | 0.25 |
| Methylene Chloride | | 75.40 | 76.80 | 77.50 | 75.40 | 76.80 | 77.50 | 0.00 | 0.00 | 0.00 |
| Methanol | | 6.60 | 6.70 | 6.75 | 6.60 | 6.70 | 6.75 | 0.00 | 0.00 | 0.00 |
| Ethanol | | 0.00 | 0.00 | 0.00 | 0.00 | 0.00 | 0.00 | 12.30 | 12.53 | 12.64 |
| n-butanol | | 0.00 | 0.00 | 0.00 | 0.00 | 0.00 | 0.00 | 4.10 | 4.18 | 4.21 |
| Methyl Acetate | | 0.00 | 0.00 | 0.00 | 0.00 | 0.00 | 0.00 | 65.60 | 66.80 | 67.40 |
| Tributylamine (solid ratio %) | | 0.00 | 0.00 | 0.00 | 0.00 | 0.00 | 0.00 | 0.10 | 0.20 | 0.50 |
| Film thickness (μm) | 20 | C.E. 1 | C.E. 3 | C.E. 5 | C.E. 6 | C.E. 8 | C.E. 10 | C.E 11 | C.E. 13 | C.E. 15 |
| | 40 | Ex. 1 | Ex. 3 | Ex. 5 | Ex. 8 | Ex. 10 | Ex. 12 | Ex. 15 | Ex. 17 | Ex. 19 |
| | 80 | Ex. 2 | Ex. 4 | Ex. 6 | Ex. 9 | Ex. 11 | Ex. 13 | Ex. 16 | Ex. 18 | Ex. 20 |
| | 120 | C.E. 2 | C.E. 4 | Ex. 7 | C.E. 7 | C.E. 9 | Ex. 14 | C.E. 12 | C.E. 14 | Ex. 21 |

[Table 2]

| Sample Film | Film Thickness (μm) | | | |
|---|---|---|---|---|
| | 20 | 40 | 80 | 120 |
| A r t o n | Ex.22 | C.E.17 | C.E.20 | C.E. 23 |
| Polycarbonate | Ex.23 | C.E.18 | C.E. 21 | C.E.24 |
| Polyether sulfone | C.E.16 | C.E.19 | C.E.22 | C.E.25 |

<Manufacture of the polarizing plate>

The polarizing plate was manufactured by preparing the polarizer adsorbing iodine to a stretched polyvinyl alcohol film, and affixing said polarizing plate protection film to both surfaces of said polarizer using polyvinyl alcohol series adhesive.

Assessment result of the equilibrium moisture content of 60 % RH at 25 degrees Celsius, polarizing property and adhesive property of above-mentioned Examples 1 to 23 and Comparative Examples 1-25 are shown in Tables 3 and 4.

[Table 3]

| No. | | Moisture Permeability (g/ $m^2 \cdot 24hr$) | Moisture Content | Polarizing Property | Adhesive Property |
|---|---|---|---|---|---|
| Example | 1 | 6.8 | 0.8 | Good | Excellent |
| | 2 | 3.8 | 0.8 | Excellent | Excellent |
| | 3 | 7.5 | 0.8 | Excellent | Excellent |
| | 4 | 4.2 | 0.8 | Excellent | Excellent |
| | 5 | 8.1 | 0.8 | Good | Excellent |
| | 6 | 4.5 | 0.8 | Excellent | Excellent |
| | 7 | 3.5 | 1.2 | Excellent | Excellent |
| | 8 | 7.2 | 1.2 | Good | Excellent |
| | 9 | 3.6 | 1.2 | Excellent | Excellent |
| | 10 | 8.2 | 1.2 | Excellent | Excellent |
| | 11 | 4.1 | 1.2 | Excellent | Excellent |
| | 12 | 9.1 | 1.2 | Good | Excellent |
| | 13 | 4.9 | 1.2 | Excellent | Excellent |
| | 14 | 3.3 | 0.9 | Excellent | Excellent |
| | 15 | 7.5 | 0.9 | Good | Excellent |
| | 16 | 3.8 | 0.9 | Excellent | Excellent |
| | 17 | 8.5 | 0.9 | Good | Excellent |
| | 18 | 4.2 | 0.9 | Excellent | Excellent |
| | 19 | 9.5 | 0.9 | Good | Excellent |
| | 20 | 5.6 | 0.9 | Excellent | Excellent |
| | 21 | 3.1 | 0.9 | Excellent | Excellent |
| | 22 | 3.1 | 0.2 | Excellent | Excellent |
| | 23 | 3.2 | 0.2 | Excellent | Excellent |

[Table 4]

| No. | | Moisture Permeability (g/$m^2$ • 24hr) | Moisture Content | Polarizing Property | Adhesive Property |
|---|---|---|---|---|---|
| C. E | 1 | 12.5 | 0.8 | Bad | Excellent |
| | 2 | 2.2 | 0.8 | Excellent | Bad |
| | 3 | 15.2 | 0.8 | Bad | Excellent |
| | 4 | 2.6 | 0.8 | Excellent | Bad |
| | 5 | 16.4 | 0.8 | Bad | Excellent |
| | 6 | 13.1 | 1.2 | Bad | Excellent |
| | 7 | 2.3 | 1.2 | Excellent | Bad |
| | 8 | 16.5 | 1.2 | Bad | Excellent |
| | 9 | 2.7 | 1.2 | Excellent | Bad |
| | 10 | 18.2 | 1.2 | Bad | Excellent |
| | 11 | 13.2 | 0.9 | Bad | Excellent |
| | 12 | 2.4 | 0.9 | Excellent | Bad |
| | 13 | 16.8 | 0.9 | Bad | Excellent |
| | 14 | 2.6 | 0.9 | Excellent | Bad |
| | 15 | 17.7 | 0.9 | Bad | Excellent |
| | 16 | 100 or more | 0.4 | Bad | Excellent |
| | 17 | 1.5 | 0.2 | Excellent | Bad |
| | 18 | 1.6 | 0.2 | Excellent | Bad |
| | 19 | 100 or more | 0.4 | Bad | Excellent |
| | 20 | 0.7 | 0.2 | Excellent | Bad |
| | 21 | 0.8 | 0.2 | Excellent | Bad |
| | 22 | 95 | 0.4 | Bad | Excellent |
| | 23 | 0.9 | 0.2 | Excellent | Bad |
| | 24 | 1 | 0.2 | Excellent | Bad |
| | 25 | 62 | 0.4 | Bad | Excellent |

<Measuring method of the equilibrium moisture content>

Titration determination by Karl Fischer technique was conducted after dissolving the sample film with methylene chloride.

<Assessment method of the polarizing property and assessment>

Measuring the parallel transmittance (Yp) and the orthogonal transmittance (Yc) in visible area of the polarizing plate by spectrophotometer, and the degree of polarization P was determined based on the next formula.

[Formula 1]

$$P = \sqrt{(Yp-Yc) / (Yp+Yc)}$$

The degree of polarization was measured after having revealed the polarizing plate sample in the atmosphere of 90 % RH at 60 degrees Celsius, for 500 hours. The measured values were classified to Excellent, Good, and Bad

using the following definition.

Excellent: The degree of polarization was 99.7 % or more.
Good: The degree of polarization was 99.6-99.2 %.
Bad: The degree of polarization was less than 99.2 %.

<Assessment method of the adhesive property and assessment>

The adhesive property was measured by peeling apart the polarizing plate protection film from the polarizing plate sample by peeling apart test after drying at 60 degrees Celsius for 24 hours and classified to Excellent or Bad using the following definition.

Excellent: There was no peeling between the polarizing plate protection film and the polarizing plate sample.
Bad: There was peeling between the polarizing plate protection film and the polarizing plate sample.

In addition, all the polarizing plate samples of which the polarizing plate protection film were manufactured with cellulose triacetate film were revealed in the atmosphere of 90 % RH at 80 degrees Celsius for 500 hours. As a result, smell of acetic acid was ensured in the polarizing plate manufactured by using the polarizing plate protection film with the prescription 1-6 among the cellulose triacetate films.

From the result, it is considered that the cellulose triacetate film itself degrades and dissolves by hydrolysis regarding these samples. However, neither the smell of acetic acid nor the change in the appearance was recognized in the polarizing plate using the polarizing plate protection film manufactured with the dope of prescription 7-9. From the result, it was recognized that the butyl amine with the addition of the prescription 7-9 improves damp proof thermal characteristics of the cellulose triacetate film.

[Example 24]

<Manufacture of the cellulose triacetate solution>

The solution was prepared by adding cellulose triacetate powder (mean size: 2mm) little by little in dissolution tank made by stainless steel and having agitation vane, agitating enough in the following solvent mixed solution. After the addition, the cellulose triacetate swelled by being stored at room temperature (25 degrees Celsius) for three hours. In addition, regarding all the methyl acetate, the cyclopentanone, the acetone, the methanol and the ethanol as the solvent were used with the water content of 0.2 mass % or less.

| | |
|---|---|
| Cellulose triacetate (substitution degree: 2.83, viscosity mean degree of polymerization: 320, water content: 0.4 mass %, viscosity of the 6 mass % methylene chloride solution: 305 mPas) | 6 mass part |
| Methyl acetate | 53 mass part |
| Cyclopentane | 10 mass part |
| Acetone | 5 mass part |
| Methanol | 5 mass part |
| Ethanol | 5 mass part |
| Plasticizer A (dipentaerythritol hexaacetate) | 3 mass part |
| Plasticizer B (triphenylphosphate) | 3 mass part |
| Fine particle powder (silica (particle size 20 nm)) | 0.1 mass part |
| Ultraviolet radiation absorbent A (2,4-bis-(n-octyl thio)-6-(4-hydroxy-3, 5-di-tert-butyl anilino) -1, 3,5- triazine) | 0.1 mass part |
| Ultraviolet radiation absorbent B (2(2'-hydroxy-3', 5'-di-tert-butylphenyl)-5-chloro benzotriazole) | 0.1 mass part |
| Ultraviolet radiation absorbent C (2(2'-hydroxy-3', 5'-di-tert-amyl phenyl))-5-chloro benzotriazole | 0.1 mass part |
| $C_{12}H_{25}OCH_2CH_2O-P(=O)-(O\ K)$ | 5 mass part |

In addition, the viscosity of this solution provided with cooling solution process described below was 160 Pas (45 degrees Celsius).

<Cooling dissolution of the cellulose triacetate solution>

Feeding the cellulose triacetate solution with screw extruder, and made them pass cooling division spending three minutes at -70 degrees Celsius. Cooling was carried out by means of coolant (produced by 3M company, "Frorinaat") that cooled down to -80 degrees Celsius with refrigerating machine. Then, the temperature of the solution provided by cooling was raised up to 120 degrees Celsius by the heat exchanger installed with static type mixer, cooled down to 50 degrees Celsius after having been held for three minutes, and the solution was fed to the vessel made of stainless steel and defoamed by stirring at 50 degrees Celsius for two hours.

The cellulose triacetate solution prepared as afore described was filtered with filter paper of absolute filtration accuracy 0.01 mm (produced by Toyo filter paper Co., Ltd., "#63") and further filtered with filter paper of absolute filtration accuracy 0.0025 mm (produced by Pall Company, "FH025").

<Manufacture of the cellulose triacetate film>

The temperature of the cellulose triacetate solution provided with afore described solution process was raised to 50 degrees Celsius and the solution was cast on the surface of the mirror plane stainless support through a casting head. The temperature of the casting support was 10 degrees Celsius, the casting speed was 40 m/minute and the casting width was 100 cm. The drying wind of 120 degrees Celsius was sent to the cast cellulose triacetate film for the purpose of drying it. Two minutes after casting, the cast film was stripped off from casting support made of mirror plane stainless steel, then, dried at 110 degrees Celsius for 10 minutes, and at 150 degrees Celsius for 30 minutes, thereby getting the cellulose triacetate film (film thickness was 40 $\mu$ m) afterwards. Moisture permeability of this cellulose triacetate film was 9.5 g/$m^2$ x 24hr, and the water content was 1.2 %.

<Manufacture of the polarizing plate A>

A polarizer was prepared by adsorbing iodine to the stretched polyvinyl alcohol film, and said cellulose triacetate film was laminated on both surfaces of the polarizer with polyvinyl alcohol series adhesive in the way that the lagging axis of polarizing membrane becomes parallel with the transmission axis.

<Assessment of polarizing property>

The degree of polarization was measured with aforesaid method after having revealed the polarizing plate A in the atmosphere of 90% RH at 80 degrees Celsius, for 500 hours.

The degree of polarization of the polarizing plate A was equal to or more than 99.6 %, and enough durability was recognized.

<Manufacture of polarizing plate B>

A polarizer was prepared by adsorbing iodine to the stretched polyvinyl alcohol film, and said cellulose triacetate film was laminated on one surface of the polarizer with polyvinyl alcohol series adhesive in the way that the lagging axis of polarizing membrane becomes parallel with the transmission axis. At the same time, said cellulose triacetate film after receiving saponification treatment was laminated on the other surface of the polarizer with polyvinyl alcohol series adhesive.

Furthermore, the polarizing plate B with the optical compensation sheet was manufactured by sticking optical compensation sheet (produced by Fuji Photo Film Co., Ltd., "WV film") with tacky adhesive to the surface on which said cellulose triacetate film was applied in the way that the lagging axis became parallel mutually.

<Assessment as the form of liquid crystal display device>

Said polarizing plate A and polarizing plate B were implemented in liquid crystal display device of TFT (thin film transistor) type. As a result, both of said polarizing plate A and polarizing plate B showed wide viewing angle and high contrast ratio.

[Example 25]

<Preparation of cellulose triacetate solution for inner layer>

The solution was prepared by adding cellulose triacetate powder (mean size 2mm) little by little in dissolution

tank made by stainless steel and having agitation vane, agitating enough in the following solvent mixed solution. After the addition, the cellulose triacetate swelled by being stored at room temperature (25 degrees Celsius) for three hours. In addition, regarding all the methyl acetate, the cyclopentanone, the acetone, the methanol and the ethanol as the solvent were used with the water content of 0.2 mass % or less.

| | |
|---|---|
| Cellulose triacetate (substitution degree: 2.83, viscosity mean degree of polymerization: 320, water content: 0.4 mass %, viscosity of 6 mass % methylene chloride solution: 305 mPas) | 16 mass part |
| Methyl acetate | 53 mass part |
| Cyclopentane | 10 mass part |
| Acetone | 5 mass part |
| Methanol | 5 mass part |
| Ethanol | 5 mass part |
| Plasticizer A (dipentaerythritol hexaacetate) | 3 mass part |
| Plasticizer B (triphenylphosphate) | 3 mass part |
| Fine particle powder (silica (particle size 20 nm)) | 0.1 mass part |
| Ultraviolet radiation absorbent A (2,4-bis-(n-octyl thio)-6-(4-hydroxy-3, 5-di-tert-butyl anilino)-1, 3,5-triazine) | 0.1 mass part |
| Ultraviolet radiation absorbent B (2(2'-hydroxy-3', 5'-di-tert-butylphenyl)-5-chloro benzotriazole) | 0.1 mass part |
| Ultraviolet radiation absorbent C (2(2'-hydroxy-3', 5'-di-tert-amylphenyl)-5-chloro benzotriazole | 0.1 mass part |
| $C_{12}H_{25}OCH_2CH_2O\text{-}P(=O)\text{-}(OK)_2$) | 0.05 mass part |

Further, the viscosity of this solution provided with cooling solution process was 60 Pas (45 degrees Celsius).

<Cooling dissolution of the cellulose triacetate solution>

Feeding the cellulose triacetate solution with screw extruder, and made them pass cooling division spending three minutes at -70 degrees Celsius. Cooling was carried out by means of coolant (produced by 3M company, "Frorinaat") that cooled down to -80 degrees Celsius with refrigerating machine. Then, the temperature of the solution provided by cooling was raised up to 120 degrees Celsius by the heat exchanger installed with static type mixer, cooled down to 50 degrees Celsius after having been held for three minutes, and the solution was fed to the vessel made of stainless steel and defoamed by stirring at 50 degrees Celsius for two hours.

The cellulose triacetate solution was filtered with filter paper of absolute filtration accuracy 0.01mm (produced by Toyo filter paper Co., Ltd., "#63") and further filtered with filter paper of absolute filtration accuracy 0.0025mm (produced by Pall Company, "FH025").

<Preparation of cellulose triacetate solution for outer layer>

The cellulose triacetate solution for outer layer was prepared in the same way as the cellulose triacetate solution for inner layer, with only changing the quantity of the cellulose triacetate to 13 mass part, and the quantity of the methyl acetate to 56 mass part respectively. Further, the viscosity of this solution provided with cooling solution process was 25 Pas (45 degrees Celsius).

< Cooling dissolution of the cellulose triacetate solution>

Feeding the cellulose triacetate solution with screw extruder, and made them pass cooling division spending three minutes at -70 degrees Celsius. Cooling was carried out by means of coolant (produced by 3M company, "Frorinaat") that cooled down to -80 degrees Celsius with refrigerating machine. Then, the temperature of the solution provided by cooling was raised up to 120 degrees Celsius by the heat exchanger installed with static type mixer, cooled down to 50 degrees Celsius after having been held for three minutes, and the solution was fed to the vessel made of stainless steel and defoamed by stirring at 50 degrees Celsius for two hours.

The cellulose triacetate solution was filtered with filter paper of absolute filtration accuracy 0.01 mm (produced by Toyo filter paper Co., Ltd., "#63") and further filtered with filter paper of absolute filtration accuracy 0.0025 mm (produced by Pall Company, "FH025").

<Manufacture of cellulose triacetate film>

The cellulose triacetate film lamination sheet of the configuration of three layers (thickness of the inner layer: 80 μm, thickness of each surface layer: 2 μm) was manufactured by simultaneously casting said cellulose triacetate solutions from a multiple casting die on to the casting support made of metal arranging so that the cellulose triacetate solution for inner layer is inside and that the cellulose triacetate solution for outer layer are outsides, peeling the cast film apart from the support, and then drying.

The film stripped off from the casting support was dried in stepwise for three minutes at 100 degrees Celsius, five minutes at 130 degrees Celsius, and for 10 minutes at 150 degrees Celsius with being conveyed by a tenter, and the solvent was evaporated, then, the cellulose triacetate film was obtained. Moisture permeability of this cellulose triacetate film was 6.8g/$m^2$ x 24hr, and the water content was 1.1 %.

<Manufacture of polarizing plate C>

A polarizer was prepared by adsorbing iodine to the stretched polyvinyl alcohol film, and said cellulose triacetate film was laminated on both surfaces of the polarizer with polyvinyl alcohol series adhesive in the way that the lagging axis of polarizing membrane becomes parallel with the transmission axis.

<Assessment of polarizing property>

The degree of polarization was measured with aforesaid method after having revealed the polarizing plate C in the atmosphere of at 80 degrees, 90RH, for 500 hours. The degree of polarization of the polarizing plate C was equal to or more than 99.6 %, and enough durability was recognized.

<Manufacture of polarizing plate D>

A polarizer was prepared by adsorbing iodine to the stretched polyvinyl alcohol film, and said cellulose triacetate film was laminated on one surface of the polarizer with polyvinyl alcohol series adhesive in the way that the lagging axis of polarizing membrane becomes parallel with the transmission axis. At the same time, said cellulose triacetate film after receiving saponification treatment was laminated on the other surface of the polarizer with polyvinyl alcohol series adhesive.

Furthermore, the polarizing plate B with the optical compensation sheet was manufactured by sticking optical compensation sheet (produced by Fuji Photo Film Co., Ltd., "WV film") with tacky adhesive to the surface on which said cellulose triacetate film was applied in the way that the lagging axis became parallel mutually.

<Assessment as the form of liquid crystal display device>

Said polarizing plate C and polarizing plate D were implemented in liquid crystal display device of TFT (thin film transistor) type. As a result, both of said polarizing plate C and polarizing plate D showed wide viewing angle and high contrast ratio.

The present invention prevents degradation of damp proof thermal characteristics of the polarizing plate protection film by adjusting moisture permeability in suitable range, and maintain polarizing capability well, and at the same time, the adhesive property between the polarizer and the polarizing plate protection film can be improved well.

While there has been described what is at present considered to be the preferred embodiment of the invention, it will be understood that various modifications may be made therein, and it is intended to cover in the appended claims all such modifications as fall within the true spirit and scope of the invention.

## Claims

1. Polarizing plate protection film for applying on at least one surface of polarizer **characterized in that** the moisture permeability is 3-10 g/$m^2$ x 24hr.

2. The polarizing plate protection film according to claim 1 wherein the equilibrium moisture content of 60% RH at 25 degrees Celsius is 0.01-1.5 %.

3. The polarizing plate protection film according to claim 1 or 2 containing 1-20 % of hydrophobic plasticizer.

**4.** The polarizing plate protection film according to claim 1, 2 or 3 further containing 0.001-5 % of degradation inhibitor.

**5.** The polarizing plate protection film according to claim 1, 2, 3 or 4 further containing 80 % of cellulose ester.

**6.** The polarizing plate protection film as claimed in claim 5 wherein said cellulose ester is cellulose acetate of which the acetification degree is from 58 to 62.5 %.

**7.** The polarizing plate protection film according to claim 1, 2, 3 or 4 **characterized in** being manufactured with the dope prepared from cellulose acylate solution, of which the solvent is comprising methyl acetate, ketone and alcohol, and the solvent ratio is 20-90 mass % of methyl acetate, 5-60 mass % of ketone, and 5-30 mass % of alcohol.

**8.** The polarizing plate protection film according to claim 1, 2, 3 or 4 **characterized in** being manufactured with the dope prepared from cellulose acylate solution, and said dope is containing 0.001-5 mass % of at least one kind of ultraviolet radiation absorbent to said cellulose acylate.

**9.** The polarizing plate protection film according to claim 7 **characterized in that** said dope is containing 0.001-5 mass % of at least one kind of ultraviolet radiation absorbent to said cellulose acylate.

**10.** The polarizing plate protection film according to claim 1, 2, 3 or 4 **characterized in** being manufactured with the dope prepared from cellulose acylate solution, and said dope is containing 0.001-5 mass % of at least one kind of corpuscle powder to said cellulose acylate.

**11.** The polarizing plate protection film according to claim 7 or 9 **characterized in that** said dope is containing 0.001-5 mass % of at least one kind of corpuscle powder to said cellulose acylate.

**12.** The polarizing plate protection film according to claim 1, 2, 3 or 4 **characterized in** being manufactured with the dope prepared from cellulose acylate solution, and said dope is containing 0.001-2 mass % of at least one kind of stripping aid to said cellulose acylate.

**13.** The polarizing plate protection film according to claim 7, 9, or 11 **characterized in that** said dope is containing 0.001-2 mass % of at least one kind of stripping aid to said cellulose acylate.

**14.** The polarizing plate protection film according to claim 1, 2, 3 or 4 **characterized in** being manufactured with the dope prepared from cellulose acylate solution, and said dope is containing 0.002-2 mass % of at least one kind of fluorine series surface active agent to said cellulose acylate.

**15.** The polarizing plate protection film according to claim 7, 9, 11 or 13 **characterized in that** said dope is containing 0.002-2 mass % of at least one kind of fluorine series surface active agent to said cellulose acylate.

**16.** Polarizing plate comprising the polarizing plate protection film as defined in claim 1, 2, 3, 4, 5, 6, 7, 8, 9, 10, 11, 12, 13, 14, or 15.

**17.** Liquid crystal display device comprising the polarizing plate as defined in claim 16.

Fig. 1

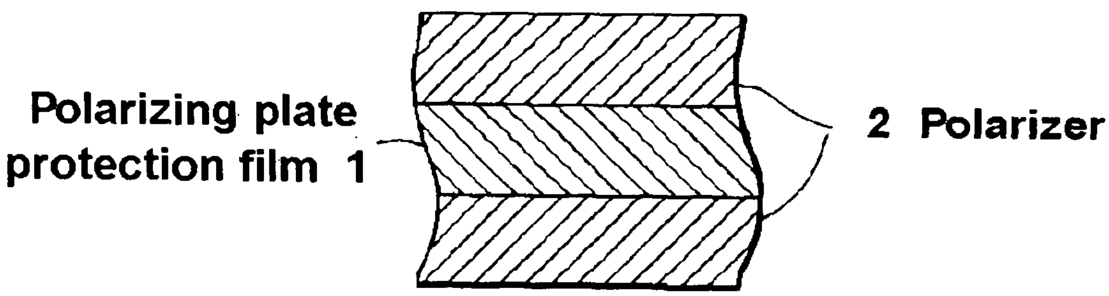

European Patent Office

# EUROPEAN SEARCH REPORT

Application Number
EP 02 00 3758

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | US 4 564 545 A (OKUMURA TAKUZO ET AL) 14 January 1986 (1986-01-14)<br>* column 2, line 19-32 *<br>* column 7, line 56 - column 10, line 4 * | 1,2,4-6, 16,17 | G02B5/30<br>C08J5/18 |
| X | US 5 753 140 A (SHIGEMURA TAKASHI) 19 May 1998 (1998-05-19)<br>* column 3, line 23 - column 4, line 56 * | 1-6,16, 17 | |
| X | US 5 695 694 A (IWATA KAORU ET AL) 9 December 1997 (1997-12-09)<br>* column 3, line 50 - column 5, line 43 *<br>* column 13, line 51 - column 14, line 17 *<br>* column 18, line 46-61 * | 1-6 | |
| X | PATENT ABSTRACTS OF JAPAN vol. 1995, no. 04, 31 May 1995 (1995-05-31) & JP 07 011056 A (FUJI PHOTO FILM CO LTD), 13 January 1995 (1995-01-13)<br>* abstract * | 1-6 | TECHNICAL FIELDS SEARCHED (Int.Cl.7)<br>G02B<br>C08J |
| X | PATENT ABSTRACTS OF JAPAN vol. 1999, no. 02, 26 February 1999 (1999-02-26) & JP 10 301105 A (BRIDGESTONE CORP), 13 November 1998 (1998-11-13)<br>* abstract; example C; table 1 * | 1,2 | |

The present search report has been drawn up for all claims

| Place of search | Date of completion of the search | Examiner |
|---|---|---|
| MUNICH | 31 May 2002 | Casse, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 00 3758

This annex lists the patent family members relating to the patent documents cited in the above-mentioned European search report. The members are as contained in the European Patent Office EDP file on
The European Patent Office is in no way liable for these particulars which are merely given for the purpose of information.

31-05-2002

| Patent document cited in search report | Publication date | Patent family member(s) | Publication date |
|---|---|---|---|
| US 4564545 A | 14-01-1986 | JP 1939882 C | 09-06-1995 |
| | | JP 6012362 B | 16-02-1994 |
| | | JP 59159109 A | 08-09-1984 |
| | | CA 1233354 A1 | 01-03-1988 |
| | | DE 3467422 D1 | 17-12-1987 |
| | | EP 0121318 A1 | 10-10-1984 |
| | | HK 80988 A | 14-10-1988 |
| | | KR 9201279 B1 | 10-02-1992 |
| | | SG 36388 G | 10-03-1989 |
| | | US 4626304 A | 02-12-1986 |
| US 5753140 A | 19-05-1998 | JP 9096722 A | 08-04-1997 |
| US 5695694 A | 09-12-1997 | DE 69411655 D1 | 20-08-1998 |
| | | DE 69411655 T2 | 05-11-1998 |
| | | EP 0647671 A1 | 12-04-1995 |
| | | JP 2994214 B2 | 27-12-1999 |
| | | JP 7278324 A | 24-10-1995 |
| | | KR 250718 B1 | 01-04-2000 |
| | | JP 8323785 A | 10-12-1996 |
| JP 07011056 A | 13-01-1995 | NONE | |
| JP 10301105 A | 13-11-1998 | NONE | |

EPO FORM P0459

For more details about this annex : see Official Journal of the European Patent Office, No. 12/82